# EUROPÄISCHE PATENTANMELDUNG

(11) **EP 4 667 699 A2**
(43) Veröffentlichungstag der Anmeldung: **24.12.2025**
(21) Anmeldenummer: 25178892.3
(22) Anmeldetag: 26.05.2025
(51) Int. Cl.: E06B 7/23, B60J 10/15, F25D 23/08

(54) **DICHTPROFIL ZUM ABDICHTEN EINES SPALTS UND EIN WERKZEUG ZUM MAGNETISIEREN DES DICHTPROFILS, SOWIE EINE FENSTER-, TÜR- ODER FASSADENECKVERBINDUNG**

(30) Priorität: 19.06.2024 DE 202024103303 U
(71) Anmelder: SCHÜCO International KG, 33609 Bielefeld (DE)
(72) Erfinder: LINDENMANN, Benjamin, 33602 Bielefeld (DE); KLEINER, Kristof, 32130 Enger (DE); ZIMMERMANN, Hermann, 32052 Herford (DE)
(74) Vertreter: Specht, Peter

(57) **Zusammenfassung**

Dichtprofil (1) zum Abdichten eines abzudichtenden Spaltes zwischen zwei Elementen (16, 17) eines Fensters, einer Tür oder einer Fassade, wobei das Dichtprofil (1) ein Matrixmaterial (12) aus einem thermoplastischen Elastomer oder einem Elastomer und ein darin eingebettetes, polymergebundenes Material (14), welches durch Magnete, insbesondere durch Dauermagnete, magnetisierbar ist, umfasst.

## Beschreibung

Die vorliegende Erfindung betrifft ein Dichtprofil für den Einsatz in einem Fenster, einer Tür oder einer Fassade, sowie ein Werkzeug zum Magnetisieren dieses Dichtprofils und Fenster-, Tür- oder Fassadeneckverbindung mit diesem Dichtprofil.

Magnetische Dichtprofile sind aus dem Bereich der Duschtüren, der Insektenfenster und aus vielen anderen Bereichen bekannt. Typischerweise bestehen solche Magnetdichtungen aus schweren Magneten, die in weich-PVC Dichtungen eingeschoben werden. Diese Magneten sind massiv und schwer verformbar und können nicht um die Ecke gelegt werden. Zudem ist weich-PVC aus umwelttechnischen Aspekten nicht die erste Wahl. Durch die massiven Magneten können die Dichtungen nur im ebenen Bereich eingesetzt werden. Die Magnete beeinflussen insgesamt auch den Uf-Wert der Systeme. Diese Dichtprofile sind überdies dauermagnetisch. Sie ziehen während der Lagerung und des Transports Metallpartikel und metallische Verbindungselemente, wie z.B. Schrauben und Nägel an, was unerwünscht ist.

Demgegenüber sind im Stand der Technik außerhalb des Anwendungsbereichs der Dichtprofile magnetisierbare Substanzen bekannt, welche nach Kontakt mit einem Dauermagneten selbst magnetisch sind, welche allerdings in einem Grundzustand im Wesentlichen nicht-magnetisch sind.

Ausgehend davon ist es daher Aufgabe der Erfindung ein Dichtprofil bereitzustellen, welches erst unmittelbar vor oder erst bei bestimmungsgemäßer Anwendung, z.B. bei einer Vor-Ort-Montage, eine magnetische Wirkung aufweist und welches zugleich eine abdichtende Wirkung aufweist.

Die Erfindung löst diese Aufgabe durch den Gegenstand des Anspruchs 1.

Ein erfindungsgemäßes Dichtprofil ist ausgebildet zum Abdichten eines abzudichtenden Spaltes zwischen zwei Elementen eines Fensters, einer Tür oder einer Fassade, speziell Elemente einer Elementfassade. Das Dichtprofil umfasst ein Matrixmaterial aus einem thermoplastischen Elastomer oder einem Elastomer und ein darin eingebettetes polymergebundenes Material, welches durch Magnete magnetisierbar ist. Besonders bevorzugt kann das Dichtprofil aus den beiden Materialien bestehen.

Vorteilhafte Ausgestaltungen der Erfindung sind Gegenstand der Unteransprüche.

Das Dichtprofil ist bevorzugt als Hohlkammerprofil ausgebildet, wobei das eingebettete magnetisierbare Material ein Teil einer Hohlkammerwandung, insbesondere eines Wandsegments der Hohlkammer, ist. Dadurch kann eine Flexibilität des Dichtprofils durch Schaffung eines Ausweichraumes für ein elastischverformtes Dichtungsmaterial bzw. Dichtungssegment erreicht werden.

Insgesamt ist das Dichtprofil weich und kann so als Spaltabdichtung auch um die Ecke gelegt werden. Die weiche Oberfläche des Dichtprofils legt sich durch seine elastischen Eigenschaften an andere Oberflächen an.

Das polymergebundene magnetisierbare Material ist vorzugsweise als ein ferrimagnetisches Material, vorzugsweise ein Ferrit, ausgebildet - Füllfaktor zwischen 70-90 Gew.%. Ein ferrimagnetisches Material weist nach seiner Magnetisierung eine besonders langzeitstabile und einflussrobuste magnetische Eigenschaft auf. Man spricht auch von einer remanenten Magnetisierung, welche aufgrund des Einflusses eines externen Magnetfeldes, z.B. eines Dauermagneten, im ferrimagnetischen Material erzeugt wird. Beim Ferrimagnetismus sind die Elementarmagnete jeweils wie beim Antiferromagnetismus abwechselnd entgegengesetzt gerichtet, in den zwei Richtungen jedoch unterschiedlich stark ausgeprägt, weshalb - anders als beim Antiferromagnetismus - sich zwei benachbarte Elementarmagnete nicht aufheben, sondern eine Magnetisierung verbleibt.

Als bevorzugte Ferrite kommen für die vorliegende Anwendung hardmagnetische Ferrite in Betracht besonders Strontium-Ferrit und Barium-Ferrit.

Das magnetisierbare Material kann vorteilhaft als Flachleiste im Matrixmaterial eingebettet sein. Dadurch kann eine besondere Dichte des erzeugten Magnetfeldes erreicht werden. Dadurch können größere Haltekräfte erreicht werden.

Alternativ oder zusätzlich kann das magnetisierbare Material als partikuläres Material im Matrixmaterial eingebettet sein. Dadurch kann eine breitere Verteilung des Magnetfelds über eine Fläche erreicht werden. Entsprechend liegt das Dichtmaterial des Dichtprofils über eine größere Dichtfläche an einer korrespondierenden Oberfläche an.

Das Dichtprofil kann vorteilhaft ein die Hohlkammer begrenzendes Wandsegment mit einer Anschlagfläche zum Anschlag an ein benachbartes Fenster-, Tür-, oder Fassadenelement aufweisen, wobei das Wandsegment das magnetisierbare Material aufweist, wobei das magnetisierbare Material unterhalb der Anschlagfläche im Matrixmaterial eingebettet ist. Das magnetisierbare Material ist somit nicht auf der Anschlagfläche, sondern von dieser beabstandet im Matrixmaterial angeordnet. Durch die Anordnung unterhalb der Anschlagfläche und die damit verbundene Bedeckung wird das magnetisierbare Material nicht oberflächlich durch Reibung abgetragen. Selbst bei verschiedenen Wärmeausdehnungen zwischen dem magnetisierbaren Material und dem Matrixmaterial wird das magnetisierbare Material nicht sukzessive abgetragen, sondern bleibt im Matrixmaterial eingebunden. Durch und/oder polymere Einbettung im Matrixmaterials ist überdies der Einfluss auf den UF-Wert sehr gering.

Die Hohlkammer muss nicht als eine einzige Kammer ausgebildet sein, sondern sie kann in mehrere Teilkammern unterteilt sein.

Die Hohlkammer kann vorteilhaft zwei gegenüberliegende flexible Wandsegmente aufweisen, welche randseitig zur vorgenannten Anschlagfläche angeordnet sind. Die beiden Wandsegmente weisen eine höhere Flexibilität auf als das Wandsegment mit der Anschlagfläche. Dadurch kann eine besonders gute elastischen Verformbarkeit der Dichtung bei verschiedenen Wetterbedingungen erreicht werden.

Die zwei flexiblen Wandsegmente können zur Erzeugung der vorgenannten Flexibilität jeweils eine dünnere Wandstärke als die Anschlagfläche und/oder eine oder mehrere Sollknickstellen aufweisen. Die Sollknickstellen können z.B. durch eine Faltenbalgkontur bereitgestellt werden.

Das Dichtprofil kann ein hyperelastisches Materialverhalten von zumindest 0,1 N/cm, vorzugsweise 1 N/cm aufweisen. Dadurch werden Anschlagkräfte gedämpft und eine bessere Anlage durch elastische Verformung des Dichtprofils wird erreicht.

Die Anordnung des magnetisierbaren Materials und/oder dessen Konzentration im magnetisierten Dichtprofil kann vorteilhaft derart bemessen sein, dass die aufzuwendende Zugkraft zum Lösen von einem identischen erfindungsgemäßen Dichtungsprofil in senkrechter Richtung zur Anschlagsfläche zumindest 0,1 N, vorzugsweise zumindest 1 N, besonders bevorzugt 5 N, beträgt. Je nach Windlast werden dadurch entsprechende Haltekräfte erzeugt, so dass durch einen Windzug kein Lösen der Dichtverbindung erfolgt.

Zur Anbindung an ein Element einer Tür, eines Fensters und/oder einer Fassade kann das Dichtprofil einen Leistenfuß zur Festlegung des Dichtprofils in einer Nut aufweisen.

Das Dichtprofil kann weiterhin vorteilhaft ein weiteres Wandsegment mit einer zweiten Anschlagsfläche aufweisen, wobei dieses Wandsegment auf einer gegenüberliegenden Seite des Hohlraums zum Wandsegment mit der ersten Anschlagsfläche angeordnet ist und wobei dieses weitere Wandsegment ein magnetisierbares Material im gleichen Umfang +/- 10 Gew.% aufweist als das gegenüberliegende Wandsegment. Dadurch wird ein beidseitig magnetisierbares Dichtprofil bereitgestellt.

Die zwei flexiblen Wandsegmente können einen um zumindest 50% geringeren Anteil an magnetisierbarem Material aufweisen als das Wandsegment mit der Anschlagsfläche. Dadurch wird eine Perturbation des Magnetfeldes der Anschlagfläche bei Verformung der flexiblen Wandsegmente verhindert.

Weiterhin kann das Dichtprofil als ein extrudierter, vorzugsweise coextrudierter, Dichtungsstrang ausgebildet ist, so dass eine einfache und unkomplizierte Bereitstellung möglich ist. Da das magnetisierbare Material erst nach der Dichtungsextrusion magnetisiert wird, kommt es nicht zu Anhaftungen im Extruder.

Es ist zudem von Vorteil, wenn die Flachleiste so dimensioniert ist, dass zumindest sie zumindest zu 10%, vorzugsweise zumindest zu 20%, des Gesamtvolumens des Wandsegments einnimmt. Dadurch wird einen gewisse Mindestbreite beim Herstellen einer anhaftenden Dichtfläche bereitgestellt.

Um eine gute Biegsamkeit und eine hohe Verformbarkeit des Dichtprofils zu erreichen, ist es von Vorteil, wenn das Wandsegment mit der Anschlagsfläche weniger als 70 Gew.%, vorzugsweise zwischen 30-70 Gew.%, an Ferrit aufweist. Durch die polymere Einbettung der Ferrite besteht das Dichtprofil überwiegend aus dem elastischen Elastomer und/oder aus TPE mit den entsprechenden vorgenannten Materialeigenschaften.

Weiterhin erfindungsgemäß ist ein Werkzeug, welches der Magnetisierung eines Dichtprofils, insbesondere des vorgenannten erfindungsgemäßen Dichtprofils, dient. Das Werkzeug weist ein Gehäuse und einen darin angeordneten Durchführungskanal mit einer Ein- und einer Ausführungsöffnung zur Durchführung des Dichtprofils durch das Gehäuse auf.

Erfindungsgemäß weist das Werkzeug zumindest Magneten, insbesondere einen Dauermagneten, auf, welcher zur Magnetisierung des Dichtprofils entlang des Durchführungskanals angeordnet ist.

Durch die Bereitstellung dieses erfindungsgemäßen Werkzeugs wird eine Magnetisierbarkeit ermöglicht.

Ebenfalls erfindungsgemäß ist ein Verfahren in welchem ein erfindungsgemäßes Dichtprofil durch das vorbeschriebene erfindungsgemäße Werkzeug durchgeführt wird.

Vorteilhafte Ausgestaltungen der Erfindung sind Gegenstand der Unteransprüche.

Es ist von Vorteil, wenn das Werkzeug zumindest zwei Magnete, insbesondere Dauermagnete, aufweist, welche an gegenüberliegenden Seiten des Durchführungskanals angeordnet sind. Dadurch können mehrere magnetisierbare Seiten gleichzeitig magnetisiert werden.

Es ist darüber hinaus von Vorteil, wenn der Magnet, insbesondere der Dauermagnet oder die Dauermagnete, als rotierbar-gelagerte Rollen ausgebildet ist oder sind, welcher oder welche jeweils eine Außenumfangsfläche mit einer vollumfänglich positiven oder negativen Polung aufweist. Üblicherweise sollten die Dauermagnete unter Aufbau entsprechender Reibungskräfte dicht an der Oberfläche vorbeigeführt werden. Durch die rotierbare Lagerung durch die vorgenannten Rollen wird eine reibungsverminderte Durchführung des Dichtprofils ermöglicht.

Besonders bevorzugt können die Rollen als Kombination aus einem Magneten mit einem Kugellager bestehen. Der Dauermagnet magnetisiert über den Ferromagnetismus die Außenbahn des Kugellagers, welches wiederum die Dichtprofil magnetisiert. Bei diesem System der indirekten Magnetisierung kann eine Magnetisierung bis zu 2 Tesla derzeit erfolgen. Analog zu den Dauermagneten ist daher eine Anordnung von zwei oder mehr Kugellagern an gegenüberliegenden Seiten des Durchführungskanals von Vorteil. Allgemein sind viele der vorgenannten Ausführungsvarianten vorteilhaft von Dauermagneten auf oberflächlich magnetisierbare Kugellager oder auch allgemein auf Magnete übertragbar.

Alternativ können auch Magnetringe um ein Kugellager herum angeordnet werden, über welche eine Magnetisierung von Dichtprofilen erfolgt.

Es ist insbesondere möglich, dass zumindest einer der Magnete des Werkzeugs als ein durch ein Kugellager rotierbar gelagerter Magnetring als rotierbar gelagerter Dauermagnet ausgebildet ist.

Zumindest einer der Magnete, insbesondere als Dauermagnet, kann benachbart zu einem Kugellager mit oberflächlich-magnetisierbarer Außenfläche angeordnet sein, welches als Abrollfläche des Dichtprofils in dem Durchführungskanal angeordnet ist.

Zur einfachen Handhabung ist es von Vorteil, wenn das Werkzeug als Handwerkzeug ausgebildet ist.

Ein besonderer Vorteil des erfindungsgemäßen Dichtprofils, ist die Möglichkeit das Dichtprofil um eine Ecke herum in anzuordnen. Daher ist eine Fenster-, Tür- oder Fassadeneckverbindung aus zwei miteinander verbundenen Elementen eines Fensters, einer Tür oder einer Fassade, insbesondere als 90° Eckverbindung, ebenfalls erfindungsgemäß. Das vorbeschriebene Dichtprofil ist ebenfalls Bestandteil dieser Eckverbindung, wobei sich das erfindungsgemäße Dichtprofil als einstückiger Dichtstrang über beide Elemente der Eckverbindung erstreckt. Eine solche Eckverbindung bei welcher der Dichtstrang quasi beide Elemente der Eckverbindung miteinander einstückig ohne eine zusätzliche Schweißnaht verbindet und in welcher der Dichtstrang gleichzeitig magnetisierbar ist, ist bislang nicht bekannt.

Weiterhin erfindungsgemäß ist ein Verfahren zur Bereitstellung eines Fensters, einer Tür oder einer Fassade umfassend ein Dichtungsprofils zum Abdichten eines abzudichtenden Spaltes zwischen zwei Elementen eines Fensters, einer Tür oder einer Fassade, welches gekennzeichnet durch die folgenden Schritte:
A Bereitstellung eines erfindungsgemäßen Dichtprofils nach einem der vorhergehenden Ansprüche - im entmagnetisierten Zustand
B Montage einer erfindungsgemäßen Fenster-, Tür- oder Fassadeneckverbindung aus zwei miteinander verbundenen Elementen eines Fensters, einer Tür oder einer Fassade, insbesondere als 90° Eckverbindung; und
C Magnetisierung und Fixierung des Dichtprofils an den Elementen der vorgenannten Eckverbindung unter Verwendung eines erfindungsgemäßen Werkzeugs.

Die Fixierung kann z.B. durch ein Einfädeln des Dichtprofils in eine Haltenut erfolgen. Die Magnetisierung kann vor oder nach dem Einfädeln erfolgen. Selbstverständlich sind auch andere Arten der Fixierung möglich. Durch die Magnetisierung vor Ort wird die Handhabung deutlich vereinfacht. Beispielsweise ziehen sich nicht mehrere Dichtbänder beim Transport und der Montage ständig an.

Neben der vorteilhaften Verwendung von Dauermagneten im erfindungsgemäßen Werkzeug und zur Magnetisierung eines erfindungsgemäßen Dichtprofils können auch Elektromagnete als Magnete i.S. der vorliegenden Erfindung genutzt werden. In diesem Fall kann ein Handgerät mit einem aufladbaren Akku versehen sein.

Weitere Vorteile, Merkmale und Einzelheiten der Erfindung ergeben sich aus der nachfolgenden Beschreibung, in der ein Ausführungsbeispiel der Erfindung anhand der beiliegenden Zeichnungen näher erläutert wird. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen:
- Fig. 1: eine Schnittansicht eines erfindungsgemäßen Dichtprofils;
- Fig. 2: eine Schnittansicht eines erfindungsgemäßen Werkzeugs zur Magnetisierung des Dichtprofils; und
- Fig. 3: Anordnung des Dichtprofils der Fig. 1 in einem Element eines Fensters, einer Tür oder einer Fassade.

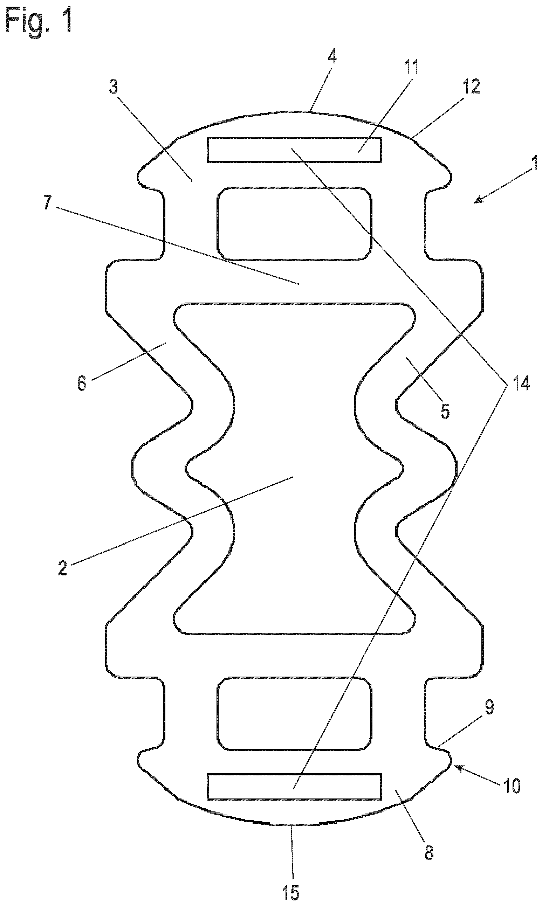

Fig. 1 zeigt eine erste Variante eines magnetisierbaren Dichtungsprofils 1 zum Abdichten eines abzudichtenden Spaltes zwischen zwei Elementen eines Fensters, einer Tür oder einer Fassade.

Besondere Anwendungsbereiche liegen sowohl im Bereich der verschwenkbaren und/oder kippbaren Türen und Fenster, aber auch im Bereich der Schiebetüren und -fenster als auch im Sonnenschutz.

Weitere Anwendungen lieben bei Insektenschutz und im Fassadenbau insbesondere im sogenannten "selfsealing".

Schließlich ist auch eine Anwendung außerhalb des Baubereichs, insbesondere im Automotivbereich, bei Duschabtrennungen und bei Kühlschränken bevorzugt.

Das Dichtungsprofil dient insbesondere zum Abdichten eines Spaltes zwischen zwei relativ zueinander beweglichen Elementen des Fensters, der Tür oder der Fassade. Besagte Elemente können beispielsweise Metallprofilrahmen, Kunststoffprofilrahmen oder Holzprofilrahmen mit entsprechenden Nuten zum Einführen des Dichtprofils 1 sein.

Das Dichtungsprofil 1 eines ersten der beiden Elemente ist als Hohlkammerprofil (Schlauchdichtung) ausgebildet. Die Hohlkammer 2 des Hohlkammerprofils weist einen Wandsegment 3 auf, welcher als eine Anschlagsfläche 4 aufweist. Die Anschlagsfläche 4, an welcher im geschlossenen Zustand eine korrespondierende Anschlagsfläche eines zweiten der beiden Elemente anliegt.

Der Hohlraum 2 ist durch weitere einander gegenüberliegende Wandsegmente 5, 6 begrenzt. Diese Wandsegmente 5, 6 sind randseitig durch das Wandsegment 3 mit der Anschlagsfläche 4 randseitig miteinander verbunden.

Die Hohlkammer in Fig. 1 ist durch Zwischenwände 7 in mehrere Hohlkammersegmente unterteilt sein.

Die Wandsegmente 5, 6 sind im Vergleich zum Wandsegment 3 zumindest bereichsweise flexibel, insbesondere faltbar, ausgebildet. Hierfür ist das Wandsegment 5, 6 zumindest bereichsweise als Faltenbalg mit entsprechenden Sollknickstellen 13 ausgebildet.

Gegenüber des Wandsegments 3 ist ein weiteres Wandsegment 8 angeordnet, welches eine Leiste 9 mit einem Leistenfuß 10 als ein- oder beidseitig vorstehender Vorsprung aufweist, welcher von einer Nut des Elements hintergreifbar ist.

Beide gegenüberliegende Wandsegmente 3 und 8 können montagefreundlich in Schnittansicht eine identische Kontur aufweisen. Es sind allerdings auch Varianten denkbar, in welchen sich die beiden Wandsegmente unterscheiden.

Das Dichtungsprofil umfasst ein im bestimmungsgemäßen Anwendungsbereich, z.B. bei Temperaturen zwischen -10 und +50°C und bei Anschlagkräften von mehr als 5 N, ein dauerhaft magnetisierbares Material 14. Dauerhaft magnetisierbar bedeutet, dass das Material nach erfolgter Aktivierung auch nach zumindest 100 Wiederholungen, vorzugsweise nach mehr als 500 Wiederholungen, in den vorgenannten Bereichen magnetisch bleibt.

Die Zugkraft zwischen zwei gleichartigen magnetisierten Dichtungsprofilen in senkrechter Richtung zur Anschlagsfläche zum Lösen der Dichtprofile mit zumindest einem oder beiden Dichtprofilen im magnetisierten Zustand beträgt zumindest 0,1N, vorzugsweise zumindest 1N, besonders bevorzugt 5 N. Die durch die Magnethaltekraft vordefinierte minimale Zugkraft sollte bevorzugt muss so groß sein, dass sich ein Fenster oder eine Tür oder dergleichen bei Windlast bzw. durch den dadurch begründeten Sog nicht öffnet. Das hängt natürlich von der Fläche des Öffnungselementes und der Positionierung am Gebäude, z.B. mittig oder Eckbereich des Gebäudes, ab.

In jedem Fall übt das magnetisierbare Material im magnetisierten Zustand deutlich stärker Anziehungskräfte auf eine Dichtfläche eines korrespondierenden Elements auf, als das Dichtungsmaterial in welchem das magnetisierbare Material eingebettet vorliegt.

Dabei sind die Anziehungskräfte derart stark, dass es bei Annäherung an den Anschlagspartner zu einer Verformung des Materials kommt.

Dabei kann es sich insbesondere, um ferrimagnetisches Material handelt, welches nach der Ausrichtung der Weiß'schen Bezirke in dem im Anwendungsbereich der Dichtbänder im Tür-, Fenster- und Fassadenbau üblichen Verformungskräften dauerhaft magnetisch sind.

In Fig. 1 ist eine Variante dargestellt, in welcher das magnetisierbare Material 14 als Flachleiste 11 unterhalb der Anschlagsfläche 4 angeordnet ist. Die Flachleiste 11 ist einen Matrixmaterial 12 des Dichtungsprofils 1 eingebettet.

Die Flachleiste kann vorzugsweise aus einem ferrimagnetischen Material als magnetisierbares Material bestehen. Ferrimagnetische Materialien können im Einfluss eines Magnetfeldes eine remanente Magnetisierung erhalten.

Bevorzugt kann die Flachleiste 11 aus einem ferrithaltigen Polymer bestehen.

Bevorzugt ist die Flachleiste 11 so dimensioniert, dass zumindest sie zumindest zu 10%, vorzugsweise zumindest zu 20%, des Gesamtvolumens des Wandsegments 3 aufweist. Das Wandsegment 3 erstreckt sich im Schnittbild über die gesamte Breite der Anschlagsfläche 4.

Als bevorzugtes Material für das Matrixmaterial kann ein Elastomer und/oder TPE vorgesehen sein. TPE ist aufgrund seiner Verarbeitbarkeit als Matrixmaterial bevorzugt.

Das Dichtprofil 1 mit der Flachleiste 11 der Fig. 1 kann als coextrudierter Strang gefertigt sein. Dabei ist der Querschnitt des Dichtprofils über seine gesamte Längserstreckung vorzugsweise konstant.

Die flexiblen Wandsegmente 5 und 6 bestehen vorzugsweise ausschließlich aus dem Matrixmaterial oder weisen vorzugsweise weniger als 30 % des vorbeschriebenen magnetisierbaren Materials pro cm³ in Bezug auf das Wandsegments 3 mit der Anschlagfläche 4 auf. Dieses magnetisierbare Material ist vorzugsweise ein ferrimagnetisches Material.

Alternativ zu der in Fig. 1 dargestellten Variante kann das Material des Wandsegments 3 alternativ oder zusätzlich zu der Flachleiste ein partikuläres vorbeschriebenes magnetisierbares, vorzugsweise ferrimagnetisches, Material aufweisen, welches in dem vorgenannten Matrixmaterial eingebettet ist.

Dies sorgt für eine homogenere Verteilung des Magnetfeldes. Es ist auch denkbar, dass das gesamte Dichtungsprofil aus diesem TPE und/oder Elastomermaterial mit den darin eingebetteten magnetisierbaren Partikeln besteht.

Das Wandsegment 3 mit der Anschlagfläche weist zur Bereitstellung einer großen Menge an magnetisierbares Material eine dickere Wandstärke, vorzugsweise eine um zumindest 50% dickere Wandstärke als die Wandsegmente 5 und 6 randseitig zu diesem Wandsegment 3, welche eine Deformierbarkeit der Dichtungsprofils 1 ermöglichen.

Besonders bevorzugt weist das Wandsegment 8 eine Anschlagsfläche 15 und ein magnetisierbares Material im gleichen Umfang +/- 10 Gew.% auf als das gegenüberliegende Wandsegment 3 mit der Anschlagsfläche 4.

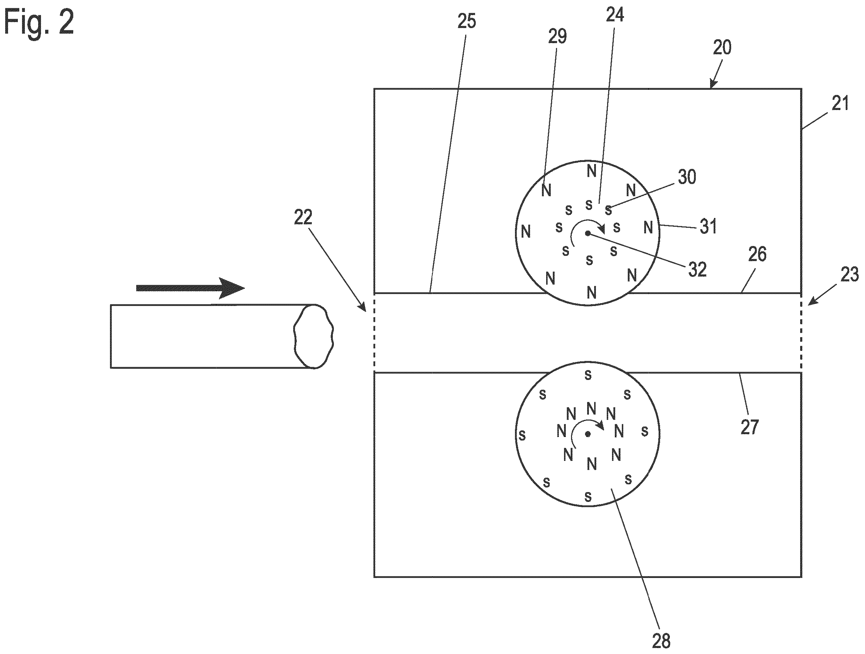

Fig. 2 zeigt ein erfindungsgemäßes Werkzeug 20 zur Magnetisierung des Dichtungsprofils.

Das Werkzeug 20 weist ein Gehäuse 21 auf mit einer Einführöffnung 22 und einer Ausführöffnung 23. Innerhalb des Gehäuses 21 ist ein Durchführungskanal 25 angeordnet, entlang welchem zumindest ein Magnet 24, vorzugsweise zumindest ein Dauermagnet, angeordnet ist.

In der Variante der Fig. 1 ist das Dichtungsprofil 1 beidseitig dauerhaft magnetisierbar. Entsprechend weist der Durchführungskanal 25 an entgegenliegenden Seiten 26 und 27 des Durchführungskanals 25 jeweils ein Magnet 24 und 28 angeordnet. In anderen Werkzeug-Varianten ist allerdings für andere Varianten von Dichtungsprofilen nur ein Magnet 24 denkbar.

Sowohl in der Variante mit einem Magneten oder mit beiden Magneten sind die Magneten als Magnetrollen ausgebildet, welche sich auf der Oberfläche, insbesondere der Anschlagfläche 4 des Dichtprofils 1 bei dessen Durchführen durch das Gehäuse 21 abrollen.

Die Magnetrolle bzw. jede der Magnetrollen weist einen ersten Pol 29 an der radialen Umfangsaußenseite auf und einen zweiten Pol 30 an der radialen Innenseite der Magnetrolle auf.

Die Umfangsaußenseite 31 der Magnetrolle korrespondiert mit der Kontur der Anschlagfläche 4 des Dichtprofils. In Fig. 1 ist die Anschlagfläche 4 des Dichtprofils 1 konvex ausgebildet und die entsprechenden Umfangsaußenseite 31 mit der Abrollfläche der Magnetrolle ist konkav ausgebildet.

Die Magnetrolle ist um eine Drehachse 32 rotierbar. Die Drehachse kann durch einen Bolzen oder dergleichen gebildet sein. Der Bolzen ist lösbar und im gelösten Zustand linear verschiebbar in einem Führungsschlitz angeordnet, so dass der Abstand der Drehachse 32 und damit auch die Magnetrolle zur Längsachse des Durchführungskanals 25 variabel einstellbar ist und somit auf verschiedene Dichtungsquerschnitte einstellbar ist. Die Einstellbarkeit kann genutzt werden um das polymergebundene Ferritmaterial unterschiedlich stark zu magnetisieren

Alternativ kann in einer nicht-dargestellten Variante zumindest einer der Magnete benachbart zu einer oberflächlich-magnetisierbaren Außenfläche eines Kugellagers angeordnet sein. Diese Außenfläche kann als Abrollfläche in dem Durchführungskanal 25 dienen. Sie steht direkt mit dem Dichtprofil 1 in Kontakt und wird an einer anderen Stelle durch den Magneten, insbesondere einen Dauermagneten, magnetisiert. Die Außenfläche kann in diesem Fall ferri- oder ferromagnetisch sein, da hier keine dauerhafte Magnetisierbarkeit notwendig ist. Es handelt sich somit um eine mittelbare Magnetisierung des Dichtprofils 1 durch den Magneten über das Kugellager.

Das Gerät ist als Handgerät ausgebildet, so dass das Dichtprofil 1 am Ort der Installation der Elemente, z.B. auf dem Bau, dauerhaft magnetisiert werden kann.

Die Magnetisierbarkeit vor Ort erleichtert deutlich die Handhabung des Dichtprofils, an welchem andernfalls Metallspäne, Metallteile, wie Schrauben und dergleichen anhaften. Diese Problematik ergibt sich bei dem erfindungsgemäßen Dichtprofil von vornherein nicht. Weiterhin kann das Profil vor Ort nachmagnetisiert werden bei Instandhaltungs- und / oder Wartungsmaßnahmen.

Durch die Verwendung des vorbeschriebenen Dichtprofils kann eine Verringerung der Bedienkräfte erfolgen, da kein Andruck zu einer Verriegelung erzeugt werden muss.

Die Magnetkraft der Dichtung kann durch Auswahl des Werkzeugs, in Abhängigkeit von den im Werkzeug verwendeten Magneten, individuell eingestellt werden und kann auch im Nachgang angepasst werden, wenn z. B. geringere Bedienkräfte benötigt werden.

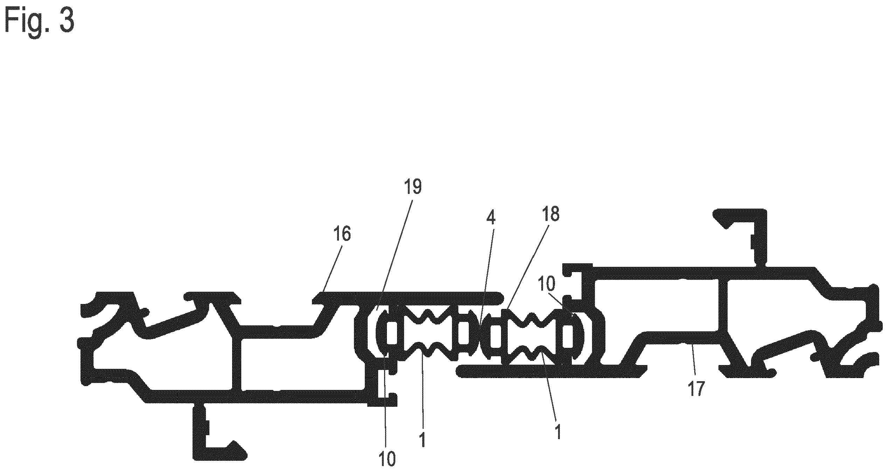

Fig. 3 zeigt sodann die Anordnung zweier erfindungsgemäßer vorbeschriebener Dichtprofile 1 der Fig. 1 in jeweils einem Element 16, 17 z.B. eines Fensters, einer Tür oder einer Fassade und dem dazwischenliegenden Spalt 18. Das jeweilige Element 16, 17 ist vorzugsweise ein Kunststoffhohlkammerprofil oder ein metallisches Hohlkammerprofil. Es kann sowohl eine Haustür oder insbesondere auch eine Autotür oder eine Kühlschranktür oder eine Insektenschiebetür (Insektenschutz) sein. Die Anwendungsbereiche sind daher vielfältig. Der Leistenfuß 10 des jeweiligen Dichtprofils 1 liegt dabei in einer Nut 19 des Elements 16, 17 ein.

Es ist im Rahmen der vorliegenden Erfindung auch möglich die Bereiche in einem Strang unterschiedlich zu stark magnetisieren. Dies ist u.a. beim Einsatz in einem Drehfenster von Vorteil. Im vertikalen Bereich ist eine hohe Kraft erforderlich, im Bereich des Öffnungswinkels ist diese hohe Kraft eher unvorteilhaft, da man den Flügel in einem solchen Fall nicht oder nur schwer öffnen kann.

Die dargestellte Variante funktioniert nicht nur für eine Verbindung zweier Dichtungen, sondern auch wenn eine Dichtung an einen Magneten, z.B. ein Magnetband oder gegen ein magnetisierten bzw. magnetisierbaren Gegenstände anschlägt.

### Bezugszeichen

- 1: Dichtprofil
- 2: Hohlkammer
- 3: Wandsegment
- 4: Anschlagsfläche
- 5: Wandsegment
- 6: Wandsegment
- 7: Zwischenwände
- 8: Wandsegment
- 9: Leiste
- 10: Leistenfuß
- 11: Flachleiste
- 12: Matrixmaterial
- 13: Sollknickstelle
- 14: magnetisierbares Material
- 15: Anschlagsfläche
- 16: Element
- 17: Element
- 18: Spalt
- 19: Nut

- 20: Werkzeug
- 21: Gehäuse
- 22: Einführöffnung
- 23: Ausführöffnung
- 24: Dauermagnet
- 25: Durchführungskanal
- 26: Seite des Durchführungskanals
- 27: Seite des Durchführungskanals
- 28: Dauermagnet
- 29: erster Pol
- 30: zweiter Pol
- 31: Außenumfangsseite
- 32: Drehachse

## Patentansprüche

1. Dichtprofil (1) zum Abdichten eines abzudichtenden Spaltes zwischen zwei Elementen (16, 17) eines Fensters, einer Tür oder einer Fassade, **dadurch gekennzeichnet, dass** das Dichtprofil (1) ein Matrixmaterial (12) aus einem thermoplastischen Elastomer oder einem Elastomer und ein darin eingebettetes, polymergebundenes Material (14), welches durch Magnete, insbesondere durch Dauermagnete, magnetisierbar ist, umfasst.

2. Dichtprofil nach Anspruch 1, **dadurch gekennzeichnet, dass** das Dichtprofil (1) als Hohlkammerprofil (2) ausgebildet ist, wobei das eingebettete magnetisierbare Material (14) Teil einer Hohlkammerwandung, insbesondere eines Wandsegments (3), ist und wobei die Hohlkammer besonders bevorzugt in mehrere Teilkammern unterteilt ist.

3. Dichtprofil nach Anspruch 1 oder 2, **dadurch gekennzeichnet, dass** das eingebettete magnetisierbare Material (14) als ein ferrimagnetisches Material, vorzugsweise ein Ferrit, ausgebildet ist, wobei besonders bevorzugt das Wandsegment (3, 8) des Dichtungsprofils mit einer Anschlagsfläche (4, 15) weniger als 70 Gew.%, vorzugsweise zwischen 30-70 Gew.%, an Ferrit aufweist.

4. Dichtprofil nach einem der vorhergehenden Ansprüche, **dadurch gekennzeichnet, dass** das Dichtprofil (1) aus dem Matrixmaterial (12) und dem darin eingebetteten magnetisierbaren Material (14) besteht, wobei das magnetisierbare Material (14) besonders bevorzugt als partikuläres Material im Matrixmaterial (12) eingebettet ist.

5. Dichtprofil nach einem der vorhergehenden Ansprüche, **dadurch gekennzeichnet, dass** das magnetisierbare Material (14) als Flachleiste (11) im Matrixmaterial (12) eingebettet ist, wobei die Flachleiste (11) vorzugsweise so dimensioniert ist, dass sie zumindest zu 10%, besonders bevorzugt zumindest zu 20%, des Gesamtvolumens des Wandsegments (3) einnimmt.

6. Dichtprofil nach einem der vorhergehenden Ansprüche, **dadurch gekennzeichnet, dass** das Dichtprofil (1) ein die Hohlkammer (2) begrenzendes Wandsegment (3) mit einer Anschlagfläche (4) zum Anschlag an ein benachbartes Fenster-, Tür-, oder Fassadenelement aufweist, wobei das Wandsegment (3) das magnetisierbare Material (14) aufweist, wobei das magnetisierbare Material (14) unterhalb der Anschlagfläche (4) im Matrixmaterial (12) eingebettet ist.

7. Dichtprofil nach einem der vorhergehenden Ansprüche, **dadurch gekennzeichnet, dass** die Hohlkammer (2) zwei gegenüberliegende flexible Wandsegmente (5, 6) aufweist, welche randseitig zur Anschlagfläche (4) angeordnet sind, wobei die beiden Wandsegmente (5, 6) eine höhere Flexibilität aufweisen als das Wandsegment (3) mit der Anschlagfläche (4).

8. Dichtprofil nach einem der vorhergehenden Ansprüche, **dadurch gekennzeichnet, dass** wobei die zwei flexiblen Wandsegmente (5, 6) jeweils eine dünnere Wandstärke als das Wandsegment (3) mit der Anschlagfläche (4) und/oder eine oder mehrere Sollknickstellen (13) aufweisen.

9. Dichtprofil nach einem der vorhergehenden Ansprüche, **dadurch gekennzeichnet, dass** das Dichtprofil (1) hyperelastisches Materialverhalten von zumindest 0,1 N/cm, vorzugsweise 1 N/cm, aufweist und vorzugsweise als ein extrudierter, vorzugsweise coextrudierter, Dichtungsstrang ausgebildet ist.

10. Dichtprofil nach einem der vorhergehenden Ansprüche, **dadurch gekennzeichnet, dass** die Anordnung des magnetisierbaren Materials (14) und/oder dessen Konzentration im magnetisierten Dichtprofil (1) derart bemessen ist, dass die aufzuwendende Zugkraft zum Lösen von einem identischen Dichtungsprofil (1) in senkrechter Richtung zur Anschlagsfläche (4) zumindest 0,1N, vorzugsweise zumindest 1N, besonders bevorzugt 5 N beträgt.

11. Dichtprofil nach einem der vorhergehenden Ansprüche, **dadurch gekennzeichnet, dass** das Dichtprofil (1) einen Leistenfuß (10) zur Festlegung des Dichtprofils (1) in einer Nut eines Elements eines Fensters, einer Tür oder einer Fassade aufweisen.

12. Dichtprofil nach einem der vorhergehenden Ansprüche, **dadurch gekennzeichnet, dass** das Dichtprofil (1) ein weiteres Wandsegment (8) mit einer zweiten Anschlagsfläche (15) aufweist, wobei dieses Wandsegment (8) auf einer gegenüberliegenden Seite des Hohlraums (2) zum Wandsegment (3) mit der ersten Anschlagsfläche (4) angeordnet ist und wobei dieses weitere Wandsegment (8) magnetisierbares Material (14) im gleichen Umfang +/- 10 Gew.% aufweist wie das gegenüberliegende Wandsegment (3).

13. Dichtprofil nach einem der vorhergehenden Ansprüche, **dadurch gekennzeichnet, dass** die zwei flexiblen Wandsegmente (5, 6) einen um zumindest 50% geringeren Anteil an magnetisierbarem Material (14) aufweist als das Wandsegment (3) mit der Anschlagsfläche (4).

14. Werkzeug (20) zur Magnetisierung eines Dichtprofils, insbesondere eines Dichtprofils (1) nach einem der vorhergehenden Ansprüche, wobei das Werkzeug (20) ein Gehäuse (21) mit einem Durchführungskanal (25) mit einer Ein- und einer Ausführungsöffnung (22, 23) zur Durchführung des Dichtprofils (1) durch das Gehäuse (21) aufweist, **dadurch gekennzeichnet, dass** das Werkzeug (20) zumindest einen Magneten aufweist, welcher zur Magnetisierung des Dichtprofils (1) im Gehäuse (21) angeordnet ist.

15. Fenster-, Tür- oder Fassadeneckverbindung aus zwei miteinander verbundenen Elementen eines Fensters, einer Tür oder einer Fassade, insbesondere als 90° Eckverbindung, und mit einem Dichtprofil (1) nach einem der vorhergehenden Ansprüche, wobei sich das Dichtprofil (1) als einstückiger Dichtstrang über beide Elemente der Eckverbindung erstreckt.

16. Verfahren zur Bereitstellung eines Fensters, einer Tür oder einer Fassade, insbesondere nach einem der vorhergehenden Ansprüche, umfassend ein Dichtungsprofils zum Abdichten eines abzudichtenden Spaltes zwischen zwei Elementen (16, 17) eines Fensters, einer Tür oder einer Fassade, **gekennzeichnet durch** die folgenden Schritte:
A Bereitstellung eines Dichtprofils (1) nach einem der vorhergehenden Ansprüche - im entmagnetisierten Zustand
B Montage einer Fenster-, Tür- oder Fassadeneckverbindung aus zwei miteinander verbundenen Elementen eines Fensters, einer Tür oder einer Fassade, ins-besondere als 90° Eckverbindung; und
C Magnetisierung und Fixierung des Dichtprofils an den Elementen der Eckverbindung unter Verwendung eines Werkzeugs nach einem der vorhergehenden Ansprüche.
